# EUROPÄISCHE PATENTSCHRIFT

(11) **EP 3 633 352 B1**
(45) Veröffentlichungstag und Bekanntmachung des Hinweises auf die Patenterteilung: **30.12.2020**
(21) Anmeldenummer: 19160093.1
(22) Anmeldetag: 28.02.2019
(51) Int. Cl.: G01J 3/02, G01J 3/10, G01J 3/433, G01N 21/39

(54) **VERFAHREN UND ANORDNUNG ZUM RELATIVEN REFERENZIEREN EINES ZIELGASES IN EINEM OPTISCHEN MESSSYSTEM FÜR DIE LASERSPEKTROSKOPIE**
METHOD AND ARRANGEMENT FOR RELATIVE REFERENCING OF A TARGET GAS IN AN OPTICAL MEASURING SYSTEM FOR LASER SPECTROSCOPY
PROCÉDÉ ET DISPOSITIF DE RÉFÉRENCEMENT RELATIF D'UN GAZ CIBLE DANS UN SYSTÈME DE MESURE OPTIQUE POUR LA SPECTROSCOPIE LASER

(30) Priorität: 02.10.2018 EP 18198084
(43) Veröffentlichungstag der Anmeldung: 08.04.2020
(73) Patentinhaber: Axetris AG, 6056 Kägiswil (CH)
(72) Erfinder: Wittmann, Andreas, 6074 Giswil (CH); Schlesinger, Sven, 6072 Sachseln (CH); Platz, Torsten, 6353 Weggis (CH)
(74) Vertreter: Klocke, Peter

(56) Entgegenhaltungen:
- WO-A1-2018/115472
- CHEN J ET AL: "VCSEL-based calibration-free carbon monoxide sensor at 2.3Â Î 1/4 m with in-line reference cell", APPLIED PHYSICS B ; LASERS AND OPTICS, SPRINGER, BERLIN, DE, Bd. 102, Nr. 2, 28. April 2010 (2010-04-28), Seiten 381-389, XP019880926, ISSN: 1432-0649, DOI: 10.1007/S00340-010-4011-0

## Beschreibung

Die Erfindung betrifft ein Verfahren zum Betreiben eines optischen Messsystems zur Messung der Konzentration eines Zielgases in einem Messgas, mit einer Wellenlängen abstimmbaren temperaturstabilisierten Laserlichtquelle, wobei ein zu einer Wellenlänge λ_{ZG} einer Zielgas-Absorptionslinie korrespondierender aktueller Grundstrom I_{DC_ZG,act} derart eingestellt wird, dass nach einer Kalibrierung der Wellenlängenabstand Δλ_{DC} zwischen der Wellenlänge λ_{ZG} der Zielgas-Absorptionslinie des Zielgases und einer Wellenlänge λ_{RG} einer Referenzgas-Absorptionslinie eines

Referenzgases für den aktuellen Grundstrom I_{DC_ZG,act} des Zielgases und den aktuellen Grundstrom I_{DC_RG,act} des Referenzgases aufrecht erhalten wird. Die Erfindung betrifft außerdem eine Anordnung zur Durchführung des Verfahrens. Optische Messsysteme zur Messung der Konzentration einer Gaskomponente in einem Messgas, basierend auf der Laser-Absorptionsspektroskopie (LAS) sind aus dem Stand der Technik in vielfältigen Ausführungsformen bekannt, ebenso eine Vielzahl von unterschiedlichen Verfahren zum Betreiben eines solchen optischen Messsystems, wie beispielsweise die Wellenlängen-Modulations-Spektroskopie (WMS) und die direkte Absorptionsspektroskopie (DAS). In der LAS spielen generell die exakte Einstellung der Laser-Wellenlänge auf die Wellenlänge der Absorptionslinie des Zielgases eine wichtige Rolle. Üblicherweise wird bei der Kalibrierung die Laser-Wellenlänge über den Arbeitspunkt von Peltiertemperatur (Grund-Lasertemperatur) und des Grundstromes I_{DC} der Laserlichtquelle definiert. Langzeit-Veränderungen des Lasers und äußere Temperatureinflüsse führen jedoch dazu, dass trotz unverändertem Grundstrom I_{DC} eine andere Wellenlänge für den gewählten Arbeitspunkt resultiert, die von der Absorptionswellenlänge des Zielgases abweicht. Mit Grundstrom wird üblicherweise ein Gleichstrom (DC) bezeichnet, bei dem die Absorptionslinie ihr Maximum hat und um den bei Abtastung der Absorptionslinie größere und kleinere Stromwerte durchfahren werden. Als Folge führen diese Veränderungen auch dazu, dass die Sensor-Kalibrierung aus den Spezifikationsgrenzen läuft, was dann oft eine Neukalibrierung des optischen Messsystems erforderlich macht.

Um die Wellenlänge des Zielgases akkurat zu halten (insbesondere bei Abwesenheit des Zielgases), wird/werden meist eine/mehrere Absorptionslinie(n) eines Referenzgases verwendet und das Prinzip des Line-Lockings angewandt. Das Referenzgas ist entweder quasi-permanent im Prozessgas enthalten oder wird beispielsweise in einer Küvette eingeschlossen, irgendwo im Sensor selbst untergebracht. Dabei kann z.B. die Küvette im Mess-Strahlengang oder in einem speziellen Referenzstrahlengang (benötigt einen Strahlteiler und eine weitere Photodiode) implementiert sein.

Oft ist es nicht möglich oder sinnvoll, das Zielgas selbst als Referenzgas zu verwenden, z.B. wenn dieses nicht langzeitstabil ist, mit diesem eine zu geringe Linienstärke verbunden ist, die aus einer zu kurzen Absorptionsstrecke resultiert und zu einem zu kleinen Absorptionssignal führt, oder zu gefährlich in der Herstellung bzw. im Betrieb ist.

Alternativ kann an Stelle des Zielgases ein anderes Gas (Referenzgas) verwendet werden, das in der Nähe einer Zielwellenlänge eine oder mehrere Absorptionslinie(n) aufweist. Beispielhaft wird auf die EP 2 307 876 B1 verwiesen. Bei diesem Patent werden beispielsweise zwei CH4 Gasabsorptionslinien verwendet, um die CO-Gasabsorptionslinie in deren Mitte exakt zu referenzieren. Oft ist jedoch der Tuningbereich der Laserlichtquelle ungenügend breit, um eine Zielgasabsorptionslinie derart akkurat zu referenzieren.

Die EP 2 307 876 B1 offenbart ein Verfahren zur Detektion mindestens eines Zielgases mittels Laserspektroskopie, mit einer Laserlichtquelle, deren Emissionswellenlänge monochrom und mittels einer Variation der Betriebstemperatur oder des Betriebsstroms abstimmbar ist. Dabei erfolgt zur Kalibrierung der Wellenlängenskala der Laserlichtquelle relativ zur variierten Betriebstemperatur oder zum variierten Betriebsstrom im Wellenlängenbereich einer Bande des mindestens einen Zielgases eine erste Abstimmung der Laserlichtquelle über eine erste Abstimmbreite, wobei mindestens zwei Absorptionslinien eines Referenzgases und mindestens eine Absorptionslinie des mindestens einen Zielgases enthalten sind. Anschließend erfolgt im Wellenlängenbereich der Bande des mindestens einen Zielgases eine zweite Abstimmung der Laserlichtquelle über eine zweite Abstimmbreite, wobei die zweite Abstimmbreite schmaler ist als die erste Abstimmbreite, und wobei mindestens eine der mindestens einen Absorptionslinie des mindestens einen Zielgases enthalten ist. Zielgas und Referenzgas sind unterschiedliche Gase. Hierbei wird die erste Abstimmung zur Kalibrierung des Laserstromes oder der Lasertemperatur mit der absoluten Wellenlängenskala einmalig und die zweite Abstimmung zur Detektion des mindestens einen Zielgases mehrfach hintereinander ausgeführt. Die zweite Abstimmbreite wird mit einem berechneten Absorptionsspektrum verglichen, wobei eine nicht-iterative Kurvenanpassung mit linearem Regressionsalgorithmus angewandt wird, um die Konzentration des mindestens einen Zielgases in einem Schritt zu berechnen. Dieses Vorgehen erfordert ein Referenzgas, das in der Nähe der Zielgasabsorptionslinie mindestens zwei Absorptionslinien aufweist, die im Tuning-Bereich des Lasers liegen. Zudem ist dieses Vorgehen zeitintensiv, da zwei Referenzlinien detektiert und ausgewertet werden müssen Ein ähnliches Verfahren wird in J. Chen et al., "VCSEL-based calibration-free carbon monoxide sensor at 2.3 µm with in-line reference cell", Appl. Phys. B (2011), 102: 381-389 beschrieben.

Aus der DE 10 2013 202 289 A1 ist zur Ansteuerung einer wellenlängendurchstimmbaren Laserdiode in einem Spektrometer ohne ein Referenzgas bekannt, eine Leistung-Zeit-Funktion vorzugeben, entsprechend der die Laserdiode periodisch über einen Wellenlängenbereich durchgestimmt wird, indem aus der Leistung-Zeit-Funktion und Messwerten der an der Laserdiode anliegenden Spannung ein Stromverlauf ermittelt wird, mit dem die Laserdiode angesteuert wird. Dabei wird der Stromverlauf, mit dem die Laserdiode unmittelbar angesteuert wird, von einer Regeleinrichtung in Abhängigkeit von der Regelabweichung zwischen der Leistungs-. aufnahme (Ist-Größe) der Laserdiode und der vorgegebenen Leistung-Zeit-Funktion (Soll-Größe) erzeugt, wobei die an der Laserdiode anliegende Spannung und der Strom durch die Laserdiode kontinuierlich erfasst, z. B. gemessen, werden und durch Multiplikation der gemessenen Strom- und Spannungswerte laufend die Leistungsaufnahme der Laserdiode ermittelt wird. Dort wird kein Referenzgas verwendet, so dass sich bei der Änderung der Temperatur des Peltierelements (Peltiertemperatur), auf dem ein Laserchip angeordnet ist, und/oder der Außentemperatur trotz vorgegebener Leistungs-Zeit-Funktion ein anderer Wellenlängenlängenbereich erfasst wird. Für das Referenzieren eines Zielgases ist diese Methode zu ungenau. Zudem wird die gesamte Spannung über dem Laser gemessen, was für die Wellenlängenbestimmung zu ungenau ist.

Liegt bei der Verwendung eines Referenzgases nur eine Referenzgaslinie vor, die nicht die Zielgaslinie ist, so muss unbedingt sichergestellt sein, dass der Wellenlängen-Abstand Δλ_{DC} zwischen Zielgas und Referenzgas im Betrieb für unterschiedliche Laserströme, und damit unterschiedlichen Lasertemperaturen konstant gehalten wird. Zudem muss der Abstand auch unter Alterung des Lasers konstant bleiben. Prinzipiell könnte man einfach einen gewissen Wellenbereich abtasten. Allerdings ist die Nachweisgrenze aufgrund des vorhandenen Rauschens (Noise), resultierend aus z.B. optische Interferenzphänomene sowie das Vorhandensein von Absorptionslinien anderer Gase im gemessenen Spektrum stark begrenzt. Deshalb ist es wichtig, den Wellenlängenabstand sehr genau einzuhalten.

Typischerweise wird der Wellenlängen-Abstand zwischen Zielgas und Referenzgas durch einen konstanten Strom-Abstand ΔI eingestellt. Durch das nicht-lineare DC-Tuningverhalten des Lasers führt eine Verschiebung (Drift) des Arbeitspunktes, beispielsweise durch den Einfluss der Außentemperatur auf die Temperaturstabilisierung oder der Alterung des Lasers/Elektronik, zu einem Distanzfehler des Wellenlängen-Abstandes. Dies hat zur Folge, dass das Zielgas (Absorptionslinie des Zielgases) an einem falschen Ort vermutet wird. Daraus ergeben sich u.U. erhebliche Messfehler.

Davon ausgehend liegt der beanspruchten Erfindung die Aufgabe zugrunde, eine andere genauere, effektive und einfach zu implementierende Möglichkeit vorzuschlagen, den Wellenlängen-Abstand zwischen Zielgaslinie und Referenzgaslinie trotz sich ändernder Lasereigenschaften, z.B. Betriebsstrom, Betriebstemperatur, Langzeitdrift, konstant zu halten.

Diese Aufgabe wird erfindungsgemäß durch ein Verfahren zum Betreiben eines optischen Messsystems zur Messung der Konzentration eines Zielgases in einem Messgas, mit den Merkmalen des Patentanspruchs 1 sowie durch eine Anordnung in Form eines Messsystems gemäß Anspruch 5 gelöst. Weitere vorteilhafte Ausführungsformen sind den jeweiligen rückbezogenen Unteransprüchen zu entnehmen.

Der Erfindung liegt der Kerngedanke zugrunde, zur Berechnung der vermuteten Wellenlängen-Position des Zielgases anstatt eines festen Stromdifferenz-Wertes die Stromdifferenz so einzustellen, dass zwischen Referenzgas(peak)position und Zielgas(peak)position d.h. zwischen den jeweiligen Absorptionslinien, eine vorab definierte Temperaturdifferenz aufrecht erhalten wird. Diese Temperaturdifferenz errechnet sich durch die Differenz der Temperaturen, die durch die jeweilig eingebrachten elektrischen Leistungen an einem Innenwiderstand der Laserlichtquelle an den Peakpositionen von Zielgas und Referenzgas zum Zeitpunkt der Kalibrierung erzeugt werden. Diese Temperaturdifferenz ist proportional zum Wellenlängenabstand der Absorptionslinien von Zielgas und Referenzgas, sodass durch diese Vorgehensweise sichergestellt wird, dass die Zielwellenlänge immer exakt bestimmbar ist.

Dieses Verfahren ermöglicht vorteilhafterweise zum Beispiel die einfache Realisierung von Anwendungen, bei denen Referenzgasabsorptionslinien und Zielgasabsorptionslinien beträchtlich weit auseinanderliegen. Als Beispiel sei hier die Methan-Lecksuche genannt, wo neben CH₄ auch C₂H₆ (Ethan) gemessen werden muss, um sicherzustellen, dass es sich um Erdgas handelt. Als Referenzgas wird Methan verwendet (das in diesem Fall auch gleichzeitig das zweite Zielgas darstellt), welches zu diesem Zweck im Strahlengang des Lasers im Sensor untergebracht wird. Hierbei beträgt der Abstand zwischen Referenzgas (Methan) und Zielgas (Ethan), je nach den gewählten Absorptionslinien zwischen 0,6 und 1,0 nm. Da dieser Abstand beträchtlich ist, kann hier ein fester Stromwert nicht mehr verwendet werden. Ein weiterer Vorteil liegt in der besonders einfachen Kalibrierung im Gegensatz zu den aus dem Stand der Technik bekannten herkömmlichen Kalibrierungsverfahren.

Die nachfolgend verwendeten Abkürzungen RG bzw. ZG stehen für (ein) Referenzgas oder (eine) Referenzgaskomponente in einem Gas bzw. für (ein) Zielgas oder (eine) Zielgaskomponente in einem Messgas. Die benutzten Bezeichnungen DC bzw. AC sind allgemein gebräuchlich und damit dem Fachmann als Bezeichnungen für Gleichspannung/Gleichstrom bzw. Wechselspannung/Wechselstrom bekannt. Sie beziehen sich auf elektrische Ströme, Spannungen und/oder Leistungen, und geben den jeweiligen Typ an. Außerdem wird das Kürzel L für die Laserlichtquelle oder allgemein für Laser verwendet. Die Begriffe RG, ZG, DC, AC bzw. L dienen der Klarstellung in den Patentansprüchen und im allgemeinen Beschreibungsteil, insbesondere in den nachstehenden Formeln. Mit Grundstrom I_{DC} werden zusammenfassend alle den jeweiligen Betriebszuständen (Kalibrierung, aktueller Grundstrom) und zugehörigen Gasen (RG, ZG) entsprechenden Grundströme bezeichnet. Die Indizes act und cal stehen für den jeweiligen aktuellen Wert bzw. kalibrierten Wert von Strom, Spannung, Temperatur, Innenwiderstand und Leistung.

Bei dem Verfahren wird erfindungsgemäß im Betrieb eine vorab bei der Kalibrierung definierte Temperaturdifferenz in der Laserlichtquelle, zwischen den zum Zeitpunkt der Kalibrierung gewählten Arbeitspunkten von Referenzgas RG, mit einem bei der Kalibrierung ermittelten Grundstrom I_{DC_RG,cal}, und dem Zielgas ZG, mit einem bei der Kalibrierung ermittelten Grundstrom I_{DC_ZG,cal}, aufrecht erhalten, indem, in Abhängigkeit eines aktuellen Grundstroms I_{DC_RG,act} des Referenzgases RG, der dafür nötige aktuelle Grundstrom I_{DC_ZG,act} für das Zielgas ZG bestimmt wird.

Zur Bestimmung der jeweiligen Größen mit Referenzgas RG und Zielgas ZG bei der Kalibrierung und der Messung werden die den Gasabsorptionslinien des Referenzgases RG und des Zielgases ZG zugeordneten Grundströme I_{DC_RG,cal} und I_{DC_ZG,cal} bzw. I_{DC_RG,act} festgestellt, die zugehörigen elektrischen Leistungen P_{DC_RG,cal} und P_{DC_ZG,cal} bzw. P_{DC_RG,act} unter Berücksichtigung der Innenwiderstände R_{I_RG,cal} und R_{I_ZG,cal} bzw. R_{I_RG,act} der Laserlichtquelle bei diesen Grundströmen bestimmt. Aus P_{DC_RG,cal} und P_{DC_ZG,cal} wird die Leistungsdifferenz ΔP_{DC,cal} berechnet. Aus P_{DC_RG,act} und der Leistungsdifferenz ΔP_{DC_cal} wird die Leistung P_{DC_ZG,act} ermittelt.

Die Kalibrierung des Messsystems wird mit dem Referenzgas RG und dem Zielgas ZG durchgeführt. Bei der Kalibrierung werden die den Gasabsorptionslinien des Referenzgases RG und des Zielgases ZG zugeordneten Grundströme I_{DC_RG,cal} und I_{DC_ZG,cal} festgestellt, die zugehörigen elektrischen Leistungen P_{DC_RG,cal} und P_{DC_ZG,cal} der Laserlichtquelle bestimmt und daraus eine Leistungsdifferenz ΔP_{DC,cal} festgelegt, die abgespeichert wird.

Erfindungsgemäß wird zudem im Betrieb des Messsystems dann die der Gasabsorptionslinie des Referenzgases RG zugeordnete elektrische Leistung P_{DC_RG,act} der Laserquelle aus dem aktuellen Grundstrom I_{DC_RG,act} und dem aktuellen Innenwiderstand R_{I_RG,act} ermittelt, indem zur Ermittlung des relevanten Grundstromes ein Strom-Scan über die Gasabsorptionslinie des Referenzgases RG ausgeführt wird, wobei die Spitzenposition (Peakposition) der Gasabsorptionslinie den aktuellen Grundstrom I_{DC_RG,act} ergibt. Die der Gasabsorptionslinie des Zielgases ZG zugeordnete elektrische Leistung P_{DC_ZG,act} der Laserquelle wird als Summe aus der elektrischen Leistung P_{DC_RG,act} und der Leistungsdifferenz ΔP_{DC,cal} bestimmt, und aus der so bestimmten elektrischen Leistung P_{DC_ZG,act} sowie dem Innenwiderstand R_{I_ZG,act} der Laserquelle der zugeordnete Grundstrom I_{DC_ZG,act} berechnet.

Mit anderen Worten heißt dies, dass bei der Kalibrierung die DC-Laserströme der Peak-Positionen von Referenzgas RG und Zielgas ZG festgelegt werden, die elektrische DC-Leistung, die am Innenwiderstand des Lasers abfällt, für die beiden Peak-Positionen ermittelt wird, indem der Innenwiderstand des Lasers an der jeweiligen Stromposition oder alternativ auch eine äquivalente Größe erfasst wird, beispielsweise durch Lock-in-Technik. Der Innenwiderstand wird entweder aus der Strom-Spannungskennlinie der Laserspannung und Grundstrom oder durch Lock-in-Technik (Modulation des Lasers mit einem Strom I_{AC} mit einer Strom-Modulationsamplitude ΔI_{AC} und Messen von U_{AC} sowie anschließendem Bestimmen der ersten Fourierkomponente (1f) des U_{AC}-Signals und Division von U_{AC,1f} durch ΔI_{AC}, wobei ΔI_{AC} auch eine äquivalente Größe sein kann) ermittelt. Zum Zeitpunkt der Kalibrierung wird die Leistungsdifferenz ΔP_{DC,cal} der DC-Leistungen oder mindestens eine äquivalente Größe ermittelt und im Sensor abgespeichert. Die Bestimmung der Leistungsdifferenz erfolgt vorzugsweise nach der nachfolgend aufgeführten Formel F 10. Alternativ können auch die in Formel F 10 angegebenen Größen im Sensor abgespeichert werden.

Im Betrieb des Messsystems wird die elektrische DC-Leistung, die am Innenwiderstand des Lasers abfällt, für die aktuelle Peakposition des Referenzgases RG bestimmt. Die Innenwiderstandsmessung kann insbesondere durch Lock-in-Technik realisiert werden. Da Drift den Arbeitspunkt verschieben kann wird die elektrische Leistung P_{DC_RG,act} regelmäßig neu berechnet (kann also nicht als fixer Wert angenommen werden). Des Weiteren wird die aktuelle elektrische Leistung an der Peakposition für das Zielgas ZG durch Addition der aktuellen Leistung für den Referenzgaspeak und der Leistungsdifferenz bestimmt. Aus der aktuellen Leistung des Peaks für das Zielgas ZG wird der DC-Strom für dessen Peakposition vorzugsweise gemäß nach der nachfolgend aufgeführten Formel F 11 ermittelt. Anschließend wird an der ermittelten Peakposition für das Zielgas ZG der Mess-Scan für das Zielgas ZG durchgeführt und hieraus die Gaskonzentration ermittelt. Der Grundstrom definiert die Position, bei der die Absorptionskennlinie ein Maximum hat. Um dieses Maximum herum wird eine Abtastung mit größeren und kleineren Stromwerten durchgeführt, um die Konzentration zu ermitteln.

Das vorgeschlagene Verfahren wird für die Erstkalibrierung des Messsystems durch den Hersteller genutzt und kann auch vom Anwender für eine eventuell nötige Nachkalibrierung eingesetzt werden.

Bei der Wellenlängen-Modulationsspektroskopie wird wie üblich eine wellenlängenabstimmbare temperaturstabilisierte Laserlichtquelle verwendet, welche eine zentrale Basiswellenlänge des Laserlichts der Laserlichtquelle periodisch durch Änderung des Grundstroms über eine interessierende Absorptionslinie der Gaskomponente an einem Arbeitspunkt variiert und gleichzeitig mit einer Frequenz (f) und einer bestimmbaren Amplitude mittels einer Modulationseinrichtung Wellenlängenmoduliert. Mit einem Lichtdetektor wird die Intensität des Laserlichtes nach dem Durchtritt durch das Messgas detektiert. Es wird eine Auswerteeinrichtung benutzt, die Mittel zur phasensensitiven Demodulation eines von dem Lichtdetektor erzeugten Messsignals bei der Frequenz (f) und/oder einer ihrer Harmonischen enthält, wobei die Laserlichtquelle mit einem Grundstrom I_{DC} und einem Modulationsstrom I_{AC} strommoduliert betrieben wird und einen Laserstrahl der Wellenlänge mit einer Wellenlängen-Modulationsamplitude Δλ_{AC} emittiert und die Wellenlängen-Modulationsamplitude Δλ_{AC} des Laserlichtes über eine variable Einstellung der Strom-Modulationsamplitude ΔI_{AC} konstant gehalten wird.

Langzeit-Veränderungen des Lasers können dazu führen, dass es nötig wird, die Grund-Lasertemperatur anzupassen. Hierbei ist jedoch auch eine Korrektur der zuvor berechneten Leistungsdifferenz ΔP_{DC,cal} nötig. Wird die Lasertemperatur verändert, so ist Formel F 15 der Formel F 11 für die Berechnung des Grundstroms I_{DC-ZG,act} vorzuziehen. Hierfür wird zum Zeitpunkt der Kalibrierung die Lasertemperatur abgespeichert.

Gemäß eines bevorzugten Verfahrensschritts werden für die Berechnung der elektrischen Leistung an den jeweiligen Grundströmen (für Zielgas ZG und Referenzgas RG) die jeweiligen Innenwiderstände benötigt. Hierbei ist zu beachten, dass der exakte Innenwiderstand u.U. erst nach mehreren Messungen iteriert. Für die Iteration werden Widerstandswerte aus einer der vorhergehenden Messungen verwendet, wobei als anfänglicher Startwert der bei der Kalibrierung ermittelte Wert verwendet werden kann. Grundsätzlich kann auch ein auf Erfahrung basierender Schätzwert verwendet werden.

Vorzugsweise wird der Innenwiderstand R_{I} der Laserlichtquelle aus einer Spannung-Strom-Kennlinie der Laserlichtquelle bestimmt, bei der der Spannungsabfall U_{L} an der Laserlichtquelle abhängig von dem Grundstrom I_{DC} aufgenommen ist. Die jeweiligen Innenwiderstände werden bei der Peakposition von Referenzgas und Zielgas ermittelt. Die Spannung-Strom-Kennlinie der Laserlichtquelle wird üblicherweise erstmals bei der Kalibrierung des optischen Messsystems aufgenommen. Es ist dabei nicht erforderlich die gesamte Kurve zu messen, sondern nur in einem Bereich um den Arbeitspunkt herum, um aus der Steigung in diesem Bereich den jeweiligen Innenwiderstand R_{I} korrekt, zu bestimmen. Dabei können in dem Bereich eine Vielzahl von Messungen durchgeführt und das Ergebnis gemittelt werden. Alternativ kann die Steigung auch mittels Lock-in-Technik ermittelt werden mit dem Vorteil, dass eine Rauschreduzierung erreicht wird. Die Ermittlung der Widerstandwerte erfolgt regelmäßig auch beim Betrieb, vorzugsweise werden diese bei jeder Konzentrationsmessung neu bestimmt.

Bei der Kalibrierung und im regulären Betrieb des optischen Messsystems wird zur Konzentrationsbestimmung eines Zielgases vorzugsweise eine Auswerteeinrichtung mit Lock-in-Technik verwendet, um in bekannter Art und Weise eine Rauschreduzierung zu erreichen, um insbesondere das vom 1/f-Signal bedingte Rauschen deutlich zu mindern. Bei einem Lock-in-Verstärker, der auch manchmal als phasenempfindlicher Gleichrichter oder Trägerfrequenzverstärker bezeichnet wird, handelt es sich um einen Verstärker zur Messung eines schwachen elektrischen Wechselsignals, das mit einem in Frequenz und Phase bekannten Referenzsignal moduliert ist. Das Gerät stellt einen extrem schmalbandigen Bandpassfilter dar und verbessert dadurch das Signal-Rausch-Verhältnis. Der Vorteil beim Einsatz eines solchen Gerätes liegt darin, dass Gleichspannungen und Wechselspannungen anderer Frequenz und Rauschen effizient gefiltert werden.

Das vorstehend beschriebene Verfahren basiert erfindungsgemäß auf den nachfolgend stehenden Formeln. Diese werden bei der Kalibrierung und/oder im Betrieb verwendet. Werte aus der Kalibrierung sind mit "_{cal}" und Werte aus dem Betrieb mit "_{act}" gekennzeichnet.

Bisher wird die aktuelle Strom-Position des Zielgases ZG relativ durch die Position des Referenzgases RG durch folgende Formel bestimmt: ${I}_{DC _ ZG , act} = {I}_{DC _ RG , act} + ΔI$ (F 1) wobei ΔI ein fester Stromwert ist, der während der Kalibrierung festgelegt wird: $Δ I = {I}_{DC _ ZG , cal} - {I}_{DC _ RG , cal}$ (F 2)

Aufgrund des oben erwähnten nicht-linearen DC-Tuningverhaltens des Lasers ist dieses Vorgehen zur Bestimmung der Position des ZG ist nicht genau genug. Aus $\frac{1}{λ} \frac{dλ}{dT} = \frac{1}{{n}_{eff}} \frac{{dn}_{eff}}{dT} + \frac{1}{{L}_{eff}} \frac{{dL}_{eff}}{dT}$ (F 3) ist ersichtlich, dass sich eine Wellenlängen-Änderung durch eine Temperaturänderung beschreiben lässt, wobei *n_{eff}* die effektive Brechzahl und *L_{eff}* die effektive Resonatorlänge des Lasers ist. Unter Berücksichtigung, dass der 1. Term auf der rechten Seite der obiger Formel dominant gegenüber dem 2. Term ist, ergibt sich eine Wellenlängenänderung zu: $Δ λ = λ ⋅ \frac{1}{{n}_{eff}} \frac{{dn}_{eff}}{dT} ⋅ Δ T$ (F 4)

Zur Berechnung der vermuteten Position des Zielgases ZG wird anstelle eines festen Stromdifferenz-Wertes (der bei der Kalibrierung nach Formel F 2 bestimmt wurde) die Stromdifferenz im laufenden Betrieb derart eingestellt, dass zwischen Referenzgas(peak)position und Zielgas(peak)position eine definierte Temperaturdifferenz ΔT_{act} aufrechterhalten wird. Somit ergibt sich folgende Temperatur an der aktuellen Position des Zielgases ZG: ${T}_{ZG , act} = {T}_{RG , act} + {ΔT}_{act}$ (F 5) wobei sich die Temperatur an der Position des Referenzgas-Peaks ergibt zu: ${T}_{RG , act} = {P}_{DC _ RG , act} ⋅ {R}_{th , act} = {I}_{DC _ RG , act}^{2} ⋅ {R}_{I _ RG , act} ⋅ {R}_{th , act}$ (F 6) wobei die elektrische Leistung über den thermischen Widerstand *R_{th,act}* in die Temperatur T_{RG,act} umgewandelt wird und die Leistung P_{DC_RG,act} durch den Laserstrom I_{DC_RG,act} im Innenwiderstand R_{I_RG,act} produziert wird.

Die aktuelle Temperatur T_{ZG,act} an der Position des Zielgas-Peaks ist dabei mit dem gesuchten Laserstrom I_{DC}__{ZG,act} über den thermischen und elektrischen Widerstand gekoppelt: ${T}_{ZG , act} = {P}_{DC _ ZG , act} ⋅ {R}_{th , act} = {I}_{DC _ ZG , act}^{2} ⋅ {R}_{I _ ZG , act} ⋅ {R}_{th , act}$ (F 7)

Bei sich während des Betriebes nicht ändernder Lasertemperatur gilt: $\begin{matrix}{ΔT}_{act} = {ΔT}_{cal} = {ΔP}_{DC , cal} ⋅ {R}_{th , cal} \\ = \left({I}_{DC _ ZG , cal}^{2}⋅{R}_{I _ ZG , cal}-{I}_{DC _ RG , cal}^{2}⋅{R}_{I _ RG , cal}\right) ⋅ {R}_{th , cal}\end{matrix}$ (F 8)

Die erwähnte Temperaturdifferenz Δ*T_{cal}* errechnet sich als Differenz der Temperaturen, die durch die jeweilig eingebrachten elektrischen Leistungen am Innenwiderstand an den Peakpositionen von Zielgas ZG und Referenzgas RG zum Zeitpunkt der Kalibrierung erzeugt werden. Da die Temperaturdifferenz proportional zur Wellenlängendifferenz zwischen ZG und RG ist, wird durch dieses Vorgehen sichergestellt, dass die Zielwellenlänge immer genau bestimmt wird.

Durch einsetzen der Formeln (F 6), (F 7) und (F 8) in Formel (F 5) ergibt der gesuchte Laserstrom an der Position des Zielgases ZG: ${I}_{DC _ ZG , act} = \sqrt{\frac{{I}_{DC _ RG , act}^{2} ⋅ {R}_{I _ RG , act} + {ΔP}_{DC , cal} \frac{{R}_{th , cal}}{{R}_{th , act}}}{{R}_{I _ ZG , act}}}$ (F 9) wobei sich mit den Werten zum Zeitpunkt der Kalibrierung eine Leistungsdifferenz ("fixed power") ergibt: ${ΔP}_{DC , cal} = {I}_{DC _ ZG , cal}^{2} ⋅ {R}_{I _ ZG , cal} - {I}_{DC _ RG , cal}^{2} ⋅ {R}_{I _ RG , cal}$ (F 10)

Unter der Annahme, dass sich der thermische Widerstand während des Betriebes nicht ändert (*R_{th,act}* = *R_{th,cal}*) ergibt sich für die Peakposition des Zielgases ZG: ${I}_{DC _ ZG , act} = \sqrt{\frac{{I}_{DC _ RG , act}^{2} ⋅ {R}_{I _ RG , act} + Δ {P}_{DC , cal}}{{R}_{I _ ZG , act}}}$ (F 11)

Formel (F11) kann auch wie folgt geschrieben werden: ${I}_{DC _ ZG , act} = \sqrt{\frac{{P}_{DC _ RG , act} + Δ {P}_{DC , cal}}{{R}_{I _ ZG , act}}}$ (F 11b)

Hierbei ist zu bemerken, dass der exakte Innenwiderstand R_{I_ZG,act} zunächst nicht bekannt ist (da er ja an der Stelle I_{DC_ZG,act}) gemessen werden müsste. Nach mehrmaligem Durchlaufen der Formel oder nach mehreren Messungen iteriert der Wert jedoch sehr schnell und der Innenwiderstand R_{I_ZG,act} wird korrekt an der Stelle I_{DC_ZG,act} ermittelt.

Ändert sich zusätzlich der Arbeitspunkt der Grund-Lasertemperatur *T_{L}* (z.B. wird die Peltiertemperatur während des Betriebes angepasst, um zu große Wellenlängenverschiebungen auf der Stromskala durch Anpassung der Grund-Laser-Temperatur zu kompensieren), so ergibt sich aus der Temperaturänderungsbedingung: $\frac{Δ λ}{λ} ≅ \frac{Δ T}{T}$ (F 12) die folgende Beziehung für die aktuelle Temperaturdifferenz: ${ΔT}_{act} = {ΔT}_{cal} \frac{{T}_{L , act}}{{T}_{L , cal}} = {ΔP}_{DC , cal} ⋅ {R}_{th , cal} \frac{{T}_{L , act}}{{T}_{L , cal}}$ (F 13) wobei die Temperaturen in Kelvin einzusetzen sind. Der resultierende Strom ergibt sich zu: ${I}_{DC _ ZG , act} = \sqrt{\frac{{I}_{DC _ RG , act}^{2} ⋅ {R}_{I _ RG , act} + {ΔP}_{DC , cal} \frac{{R}_{th , cal}}{{R}_{th , act}} ⋅ \frac{{T}_{L , act}}{{T}_{L , cal}}}{{R}_{I _ ZG , act}}}$ (F 14)

Kann eine Änderung des thermischen Widerstandes vernachlässigt werden, so ergibt sich wiederum: ${I}_{DC _ ZG , act} = \sqrt{\frac{{I}_{DC _ RG , act}^{2} ⋅ {R}_{I _ RG , act} + {ΔP}_{DC , cal} ⋅ \frac{{T}_{L , act}}{{T}_{L , cal}}}{{R}_{I _ ZG , act}}}$ (F 15)

Es ist allgemein bekannt, dass jedes Laserlichtquellen-Schaltbild durch ein Ersatzschaltbild ersetzt werden kann, das einen Laseremitter (aktive Zone) und einen dazu in Serie geschalteten Innenwiderstand R_{I} umfasst. Sobald durch die Laserlichtquelle ein Grundstrom I_{DC} fließt, liegt an der Laserlichtquelle eine Spannung U_{L} an, die zum Teil am Laseremitter als Teilspannung U_{E} und an dem Innenwiderstand R_{I} als Teilspannung U_{RI} abfällt, wobei U_{E} je nach Lasertyp (mit Telekom-naher Wellenlänge) einen Wert von typisch 0.9 - 1.1 V aufweist. Im Falle von WMS wird zusätzlich ein Modulationsstrom I_{AC} zum Grundstrom addiert, welcher jedoch auf dieses Verfahren keine Auswirkungen hat, da sich die Temperaturänderungen zeitlich herausmitteln.

Die aktuelle DC-Leistung an der Position des Referenzgas-Peaks errechnet sich aus dem Grundstrom I_{DC_RG,act} der durch die Laserlichtquelle fließt und dem am Innenwiderstand R_{I_RG,act} auftretenden Spannungsabfall U_{RI_RG,act} als ${P}_{DC _ RG} = {I}_{DC _ RG , act} ⋅ {U}_{RI _ RG , act} = {I}_{DC _ RG , act}^{2} ⋅ {R}_{I _ RG , act}$ (F 16)

Die Kalibrierung des optischen Messsystems erfolgt weitgehend nach der üblichen dem Fachmann geläufigen Methode mittels eines bekannten Referenzgases RG, das auch ein Zielgas ZG sein kann und dem eigentlichen Zielgas ZG selbst. Zunächst wird für die Festlegung des Arbeitspunktes der Laserlichtquelle die Temperatur der temperaturstabilisierten Laserlichtquelle solange verändert, bis die Absorptionssignale für das Referenzgas RG und das Zielgas ZG an einem gewünschten Arbeitspunkt detektiert werden. Anschließend wird die Leistungsdifferenz ermittelt und abgespeichert.

Die erfindungsgemäße Anordnung besteht aus einem Messsystem zur Durchführung des Verfahrens mit einer Modulationseinrichtung zur Bereitstellung des Grundstromes I_{DC} für die Laserlichtquelle, einer Aufnahme (Messkammer) für das Messgas, einem Lichtdetektor, einer mit dem Lichtdetektor und der Modulationseinrichtung verbundenen Auswerteeinheit, Mitteln zur Erfassung der an der Laserlichtquelle anliegenden Spannung, Mitteln zur Erfassung der Lasergrundtemperatur, Mitteln zur Ermittlung des Innenwiderstandes der Laserlichtquelle sowie Mitteln zur Steuerung der Grundströme I_{DC} für Referenzgas RG und Zielgas ZG. Besonders bevorzugt ist das Referenzgas RG im Strahlengang des Lasers im Sensor angeordnet, so dass der von der Laserlichtquelle emittierte Laserstrahl zuerst durch das Referenzgas RG und anschließend durch das Messgas zum Lichtdetektor gelangt. Dies ermöglicht einen äußerst kompakten Aufbau des gesamten Messsystems und die Herstellung von einfach zu handhabenden und zu transportierenden Gasdetektionseinrichtungen.

Nachfolgend wird die Erfindung an Hand der beigefügten Zeichnungen nochmals näher erläutert. Es zeigen in schematischer Darstellung:
- Figur 1: ein für die Durchführung des erfindungsgemäßen Verfahrens geeignetes optisches Messsystem;
- Figur 2: das Ersatzschaltbild für die Laserlichtquelle;
- Figur 3: eine aufgenommene Spannungs-Strom-Kennlinie zur Bestimmung des Innenwiderstandes der Laserlichtquelle;
- Figur 4: die Wellenlänge λ_{I} als Funktion des Stromes mit einer schematischen Darstellung der Zielgas-Position und der Referenzgas-Position mit festem Stromabstand zwischen dem Referenzgas-Peak und dem Zielgas-Peak, bei einer bestimmten Temperatur und deren Verschiebung durch Temperaturdrift;
- Figur 5: eine Messkurve für Methan als Referenzgas RG, gleichzeitig auch ein weiteres Zielgas und Ethan als Zielgas ZG, bei der Zieltemperatur (durchgezogene Linie) und nach dem Drift (gestrichelte Linie) durch Änderung der Lasertemperatur;
- Figur 6: der Distanzfehler zum Zielgaspeak gegenüber der Drift des Referenzgaspeaks, gemessen mit fester Stromdifferenz und fester Temperaturdifferenz an einem Beispiel; und
- Figur 7: ein Ablaufschema für die Fixierung des Wellenlängen-Abstandes zu einer Referenzwellenlänge.

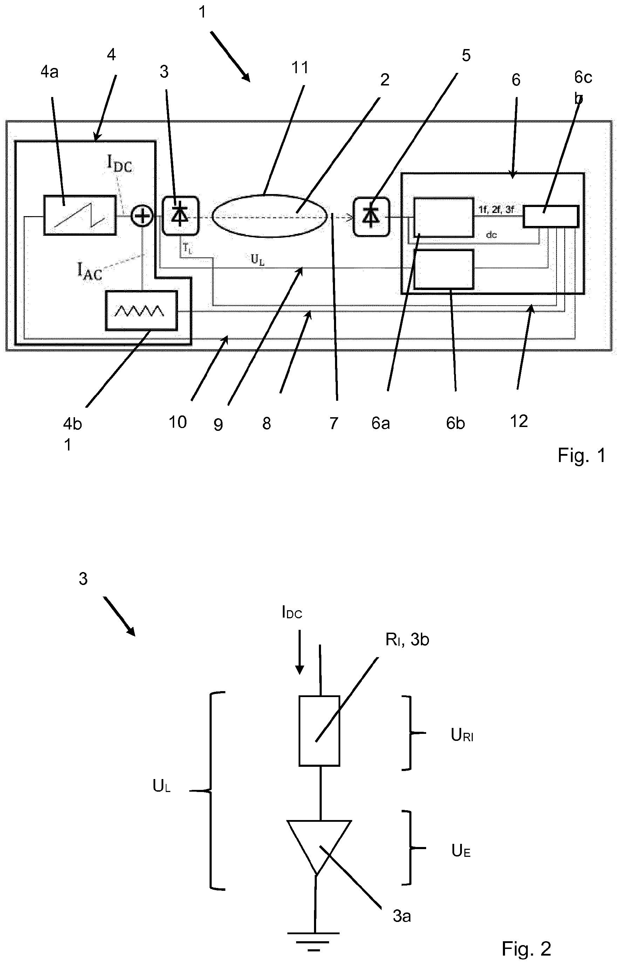

Die Figur 1 zeigt schematisch den prinzipiellen Aufbau eines optischen Messsystems 1 zur Messung der Konzentration eines Zielgases ZG in einem Messgas 2, basierend auf der Wellenlängen-Modulationsspektroskopie (WMS). Das Messsystem 1 weist eine wellenlängenabstimmbare temperaturstabilisierte Laserlichtquelle 3, eine Modulationseinrichtung 4, einen Lichtdetektor 5 und eine elektronische Auswerteeinrichtung 6 auf. Die Laserlichtquelle 3 emittiert einen Laserstrahl 7 mit einer Wellenlänge λ_{DC} mit einer Wellenlängen-Modulationsamplitude Δλ_{AC}. Die Modulationseinrichtung 4 variiert die Wellenlänge des Laserlichts der Laserlichtquelle 3 periodisch über Referenzgasabsorptionslinie und Zielgasabsorptionslinie an einem Arbeitspunkt und moduliert diese zudem gleichzeitig dreiecksförmig mit einer Frequenz (f) und einer einstellbaren Amplitude. Sie beinhaltet zudem mindestens eine DC- und/oder AC-Spannungsquelle oder eine DC- und AC-Stromquelle 4a und zugeordnete Modulationsmittel 4b zum Betrieb der Laserlichtquelle 3. Damit kann der jeweilige Grundstrom I_{DC} und der Modulationsstrom I_{AC} variabel eingestellt werden. Die Modulationseinrichtung 4 ist direkt mit der Laserlichtquelle 3 verbunden. Der Lichtdetektor 5 erfasst den von der Laserlichtquelle 3 ausgehenden Laserstrahl 7, nachdem dieser das in einer Messkammer 11 befindliche Messgas 2 passiert hat, und erzeugt ein Empfangssignal, das von der Intensität des Laserlichtes nach dem Durchtritt durch das Messgas 2 abhängig ist und der Auswerteinheit 6 zugeführt wird. Die Auswerteinheit 6 umfasst Mittel zur phasensensitiven Demodulation eines von dem Lichtdetektor 5 erzeugten Messsignals bei der Frequenz (f) und/oder einer ihrer Harmonischen. Die Auswerteinheit 6 weist zwei Lock-in-Verstärker 6a, 6b und eine Recheneinheit 6c auf. Die Recheneinheit 6c wertet das demodulierte Empfangssignal des Lichtdetektors 5 aus. Des Weiteren führt eine elektrische Verbindungsleitung 9 zu dem Lock-in-Verstärker 6b, mit der die an der Laserlichtquelle 3 anliegende Spannung erfasst und der Innenwiderstand bestimmt wird. Davon abhängig werden die Grundströme I_{DC} und Modulationsströme für Referenz- und Zielgas mittels der Modulationseinrichtung 4 gesteuert, um den Wellenlängenabstand zwischen Referenzgas RG und Zielgas ZG konstant zu halten. Dazu sind elektrische Steuerleitungen 8 und 10 von der Auswerteinheit 6 zu der Modulationseinrichtung 4 vorgesehen. Bei der Auswertung werden unter anderem primär die vorstehend aufgeführten Formeln F 11 oder F 15 zusammen mit F 10 verwendet. Über die Leitung 12 wird die Peltiertemperatur zu der Auswerteinheit 6 übertragen. Bei der Kalibrierung ist in diesem Ausführungsbeispiel das Referenzgas RG permanent im Strahlengang vorhanden. Das Zielgas ZG wird dann in die Messgaskammer 11 eingeleitet.

Die Figur 2 stellt das Ersatzschaltbild für die Laserlichtquelle 3 dar. Die Laserlichtquelle 3 kann demnach durch einen Lichtemitter 3a und einen dazu seriell angeordneten Innenwiderstand R_{I}, 3b rechnerisch ersetzt werden. Die Laserlichtquelle 3 wird mit einem Grundstrom I_{DC} und einem Modulationsstrom I_{AC} strommoduliert betrieben. An der Laserlichtquelle 3 liegt Spannung U_{L} an, die jeweils teilweise an dem Innenwiderstand 3b als Teilspannung U_{RI} und am Lichtemitter 3a als Teilspannung U_{E} abfällt.

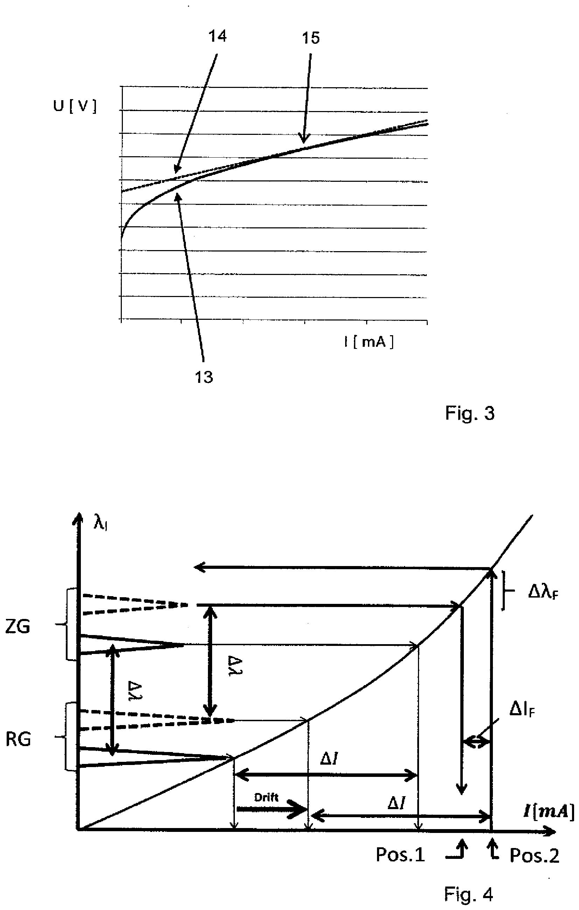

Die Figur 3 veranschaulicht eine bei der Kalibrierung des optischen Messsystems 1 aufgenommene Strom/Spannungskennlinie 13 zur Bestimmung des Innenwiderstandes R_{I_RG} der Laserlichtquelle 3 am Ort des Referenzgases RG. Der Innenwiderstand R_{I_RG} wird aus der Beziehung der Strom-Spannungs-Charakteristik der Laserlichtquelle 3 im Arbeitspunkt 15 I_{DC_RG,cal} für RG bestimmt. Dazu ist die Strom-Spannungs-Kennlinie 13 (durchgezogene Linie) mit linearer Approximationslinie 14 (gestrichelte Linie) im Arbeitspunkt 15 zur Bestimmung des Innenwiderstandes R_{I_RG} am Ort des Referenzgases RG versehen. Die Steigung der Approximationslinie 14 entspricht dem Innenwiderstande R_{I}, 3b am Arbeitspunkt 15 mit R_{I_RG}. Analoges Vorgehen wird am Ort des Zielgases ZG zur Ermittlung von R_{I_ZG} angewendet.

Die Figur 4 verbildlicht in schematischer Darstellung beispielhaft die Wellenlängen-Position eines Zielgases ZG und die eines Referenzgases RG bei einer bestimmten Ziel-Temperatur, wobei die beiden Positionen zueinander einen definierten Wellenlängenabstand Δλ_{DC} aufweisen, der über die DC-Tunability-Kurve zu einem Stromabstand ΔI führt. Die Absorptionslinien sind für die Ziel-Temperatur durchgezogenen und für einen durch reduzierte Ziel-Temperatur induzierten Drift gestrichelt dargestellt. Typischerweise wird der Wellenlängen-Abstand Δλ_{DC} durch einen konstanten Strom-Abstand *ΔI* eingestellt. Durch das nicht-lineare DC-Tuningverhalten des Lasers führt eine Verschiebung (Drift) des Arbeitspunktes, beispielsweise durch Einfluss der Außentemperatur des Sensors auf die Temperaturstabilisierung oder der Alterung des Lasers/Elektronik zu einem Distanzfehler ΔI_{F} für die Position des Gaspeaks des Zielgases ZG, sodass daraus Messfehler resultieren. Die Figur zeigt schematisch die Position des Referenzgases RG und des Zielgases ZG zum Zeitpunkt der Kalibrierung. Durch Drift wird die Position der Referenzgaslinie verschoben. Aufgrund des nichtlinearen Zusammenhangs zwischen Wellenlänge und Laserstroms ergibt sich bei einer festen Stromdistanz *ΔI* eine Differenz, d.h. eine falsche Wellenlänge mit einem Wellenlängendistanz-Fehler Δλ_{F}, d.h. ein Distanzfehler zwischen der berechneten und der tatsächlichen Zielgas-Position. Im günstigsten Fall ist der Fehler klein (typ. <20 µA) und der Sensor ist immer noch innerhalb seiner Spezifikationen bezüglich Genauigkeit der Konzentration. Wird der Fehler grösser, steigt der Fehler überlinear an. Im Extremfall wird der Peak nicht einmal mehr im Tuningbereich liegen (in Fig. 4 wird beispielsweise das Zielgas ZG gar nicht mehr gemessen). Je grösser der Abstand zwischen Referenzgas RG und Zielgas ZG ist, desto geringer muss nach dieser Methode der erlaubte Drift sein, andernfalls ist der Distanzfehler >20 µA. An Pos.1 liegt die tatsächliche Zielgas-Position (zugehöriger Grundstrom) und an Pos.2 die über die Formeln F 1 bis F 2 berechnete Zielgas-Position (zugehöriger Grundstrom). Diese beiden Zielgas-Positionen weichen um den Distanzfehler ΔI_{F} voneinander ab. Zu beachten ist, dass die DC-Tunability-Kurve selbst unbeeinträchtigt durch einen Drift gezeichnet ist. In der Realität kann sich auch die DC-Tunability-Kurve selbst mit einer Langzeitdrift ändern.

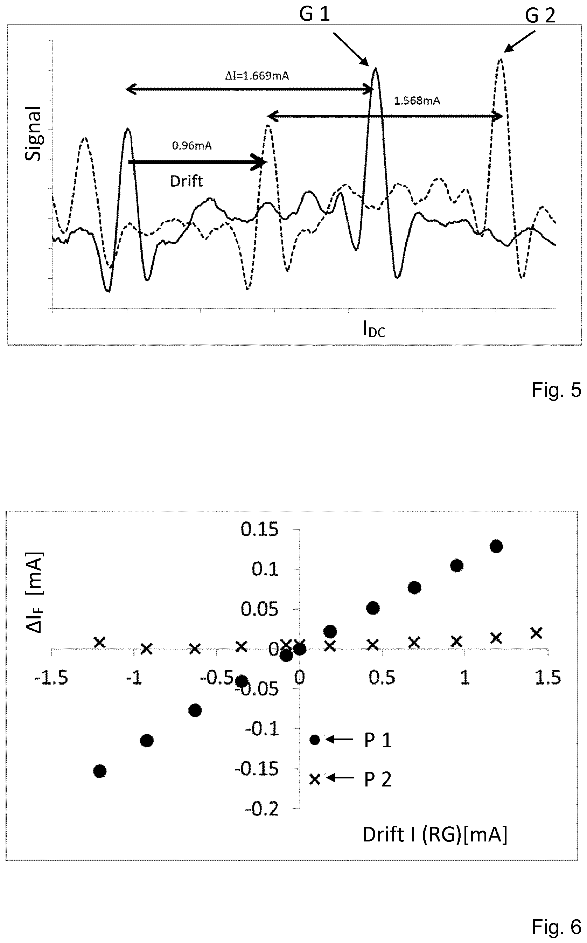

In der Figur 5 ist beispielhaft eine Messkurve, d.h. ein Spektrum für Methan CH₄ mit einer niedrigeren Spitze als Referenzgas RG und Ethan C₂H₆ als Zielgas ZG mit einer höheren Spitze, bei einer bestimmten Zieltemperatur (durchgezogene Linie G 1) und von der Zieltemperatur abweichenden Temperatur (gestrichelte Linie G 2) dargestellt. Die Abweichung der Linie G 1 von der Linie G 2 ist durch eine Änderung der Lasertemperatur bedingt und soll den Einfluss von Drift auf den Abstand der Gaspeaks veranschaulichen. Beispielhaft wird gezeigt, welcher Distanzfehler ΔI_{F} resultiert, wenn von einem Referenzgaspeak ausgehend (hier CH₄) mit fester Stromdistanz ein Zielgas (Ethan C₂H₆) bei geringfügig unterschiedlicher Lasertemperatur gemessen wird. Durch die Temperaturreduktion ergibt sich eine Verschiebung des Referenzgaspeaks um 0.96 mA. Es ist zu erkennen, dass der tatsächliche Abstand von Referenzpeak und Zielgaspeak von 1.669 mA auf 1.568 mA abgenommen hat. Wie bereits vorstehend erwähnt, ist dies durch die nicht-lineare DC-Tunability der Laserlichtquelle hervorgerufen. Es ergibt sich somit ein Distanzfehler ΔI_{F} von ca. 100 µA. Wendet man die vorgeschlagene Methode mit fester Temperaturänderung an (Formel (F 15)), so ergibt sich ein Distanzfehler ΔI_{F} von nur 10 µA (Figur 6). Dies führt dazu, dass das Zielgassignal korrekt ausgewertet werden kann.

Figur 6 verdeutlicht die Abhängigkeit der Distanzfehler ΔI_{F} von den Driftwerten an Hand eines Beispiels. Dieses zeigt für verschiedene Driftwerte den Distanzfehler ΔI_{F} für die Verwendung einer festen Stromdifferenz nach Formel (F 1) und fester Temperaturdifferenz nach Formel (F 15). Die Werte basierend auf der Formel (F1) sind als Punkte P 1 und die Werte basierend auf Formel (F 15) als Kreuze P 2 dargestellt. Es ist zu erkennen, dass mit der vorgeschlagenen Methode der Distanzfehler ΔI_{F} des Grundstromes I_{DC} nie grösser als 20 µA wird, was genügend klein ist, um sicherzustellen, dass die gemessene Konzentration innerhalb der Spezifikationen bleibt.

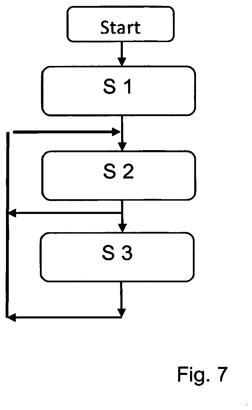

Figur 7 veranschaulicht ein Ablaufschema für die Fixierung des Wellenlängen-Abstandes zu einer Referenzwellenlänge. Dabei werden in einem ersten Verfahrensschritt S1, d.h. bei der Kalibrierung des Messsystems 1, zum Einen die DC-Grundströme der Peak-Positionen von Referenzgas RG und Zielgas ZG festgelegt und zum Zweiten die elektrische DC-Leistung, die am Innenwiderstand des Lasers abfällt, wird für die beiden Peak-Positionen ermittelt, indem der Innenwiderstand des Lasers an der jeweiligen Stromposition bestimmt wird. Zum Dritten wird die Leistungsdifferenz ΔP_{DC,cal} der DC-Leistungen ermittelt und im Sensor abgespeichert. In dem darauf folgenden zweiten Verfahrensschritt S2, d.h. beim Betrieb des Messsystem 1, wird zunächst die elektrische DC-Leistung, die am Innenwiderstand des Lasers abfällt, für die aktuelle Peakposition des Referenzgases RG durch das Messen des Innenwiderstandes durch Lock-in-Technik bestimmt, dann die aktuelle elektrische DC-Leistung an der Peakposition für das Zielgas ZG durch Addition der aktuellen DC-Leistung für den Referenzgaspeak und der bei der Kalibrierung ermittelten DC-Leistungsdifferenz zwischen dem Referenzgas RG und dem Zielgas ZG berechnet. Anschließend wird der DC-Strom für dessen Peakposition ermittelt, wobei hierfür nach Formel F 11 oder F 15 der Innenwiderstand des Zielgases ZG aus einer der vorhergehenden Messungen Verwendung findet, wobei der Startwert der bei der Kalibrierung ermittelte Wert ist. Im Falle von Verwendung von F 15 wird zusätzlich das Verhältnis der aktuellen Lasertemperatur zur Kalibrier-Lasertemperatur verwendet. Zum Zeitpunkt der Kalibrierung wird die Lasertemperatur abgespeichert.

In dem anschließenden dritten Verfahrensschritt S3 wird anhand der ermittelten Peakposition für das Zielgas ZG der eigentliche Mess-Scan für das Zielgas ZG durchgeführt und hieraus die Gaskonzentration ermittelt.

Die Verfahrensschritte S2 mit S3 werden vorzugsweise in einer Schleife mehrfach ausgeführt, wobei zwischen den Verfahrensdurchläufen der Grundstrom I_{DC_ZG} für die Zielgas(peak)position angepasst werden kann, wenn der aktuelle Grundstrom I_{DC_ZG,act} von dem idealen Grundstrom I_{DC_ZG.cal}, der bei der Kalibrierung des optischen Messsystems ermittelt worden ist, abweicht.

## Patentansprüche

1. Verfahren zum Betreiben eines optischen Messsystems (1) mit einer Wellenlängen abstimmbaren temperaturstabilisierten Laserlichtquelle (3) zur Messung der Konzentration eines Zielgases ZG in einem Messgas (2), wobei ein zu einer Wellenlänge λ_{ZG} einer Zielgas-Absorptionslinie korrespondierender aktueller Grundstrom I_{DC_ZG,act} derart eingestellt wird, dass nach einer Kalibrierung der Wellenlängenabstand Δλ_{DC} zwischen der Wellenlänge λ_{ZG} der Zielgas-Absorptionslinie des Zielgases ZG und einer Wellenlänge λ_{RG} einer Referenzgas-Absorptionslinie eines Referenzgases RG für den aktuellen Grundstrom I_{DC_ZG,act} des Zielgases ZG und den aktuellen Grundstrom I_{DC_RG,act} des Referenzgases RG aufrecht erhalten wird, **dadurch gekennzeichnet, dass**
die Kalibrierung des Messsystems (1) mit dem Referenzgas RG und dem Zielgas ZG durchgeführt wird, wobei bei der Kalibrierung
- die den Gasabsorptionslinien des Referenzgases RG und des Zielgases ZG zugeordneten Grundströme I_{DC_RG,cal} und I_{DC_ZG,cal} festgestellt werden,
- die zugehörigen elektrischen Leistungen P_{DC_RG,cal} und P_{DC_ZG,cal} der Laserlichtquelle (3) aus den Grundströmen I_{DC_RG,cal} und I_{DC_ZG,cal} sowie den zugehörigen Innenwiderständen R_{I_RG,cal} und R_{I_ZG,cal} bestimmt werden,
- mittels der elektrischen Leistungen P_{DC_RG,cal} und P_{DC_ZG,cal} eine Leistungsdifferenz ΔP_{DC,cal} festgelegt und diese oder eine oder mehrere äquivalente Größe/n im Messsystem (1) abgespeichert wird,
und dass im Betrieb des Messsystems (1) eine vorab bei der Kalibrierung definierte Temperaturdifferenz in der Laserlichtquelle (3), zwischen den zum Zeitpunkt der Kalibrierung gewählten Arbeitspunkten von Referenzgas RG, mit einem bei der Kalibrierung ermittelten Grundstrom I_{DC_RG,cal}, und Zielgas ZG, mit einem bei der Kalibrierung ermittelten Grundstrom I_{DC_ZG,cal}, aufrecht erhalten wird, indem, in Abhängigkeit des aktuellen Grundstroms I_{DC_RG,act} des Referenzgases RG, der dafür nötige aktuelle Grundstrom I_{DC_ZG,act} für das Zielgas ZG bestimmt wird, wobei
- die der Gasabsorptionslinie des Referenzgases zugeordnete aktuelle elektrische Leistung P_{DC_RG,act} der Laserquelle (3) aus dem aktuellen Grundstrom I_{DC-RG,act} und dem aktuellen Innenwiderstand R_{I_RG,act} ermittelt wird,
- die der Gasabsorptionslinie des Zielgases zugeordnete aktuelle elektrische Leistung P_{DC_ZG,act} der Laserquelle (3) als Summe aus der aktuellen elektrischen Leistung P_{DC_RG,act} und der Leistungsdifferenz ΔP_{DC,cal} bestimmt wird,
- aus der aktuellen elektrischen Leistung P_{DC_ZG,act} der Laserquelle (3) der zugeordnete aktuelle Grundstrom I_{DC_ZG,act} unter Berücksichtigung des aktuellen Innenwiderstands R_{I_ZG,act} berechnet wird.

2. Verfahren nach Anspruch 1, **dadurch gekennzeichnet, dass** im Betrieb die Messung der Konzentration des Zielgases ZG mit dem zuvor aus der Leistung P_{DC_RG,act}, der Leistungsdifferenz ΔP_{DC,cal} und dem Innenwiderstand R_{I_ZG,act} berechneten Grundstrom I_{DC_ZG,cal} durchgeführt und daraus die Gaskonzentration des Zielgases ZG in dem Messgas (2) ermittelt wird.

3. Verfahren nach Anspruch 1 oder 2, **dadurch gekennzeichnet, dass** beim Betrieb des Messsystems (1) Änderungen einer Lasergrundtemperatur T_{L} der Laserlichtquelle (3) durch Anpassung der Leistungsdifferenz ΔP_{DC,cal} berücksichtigt werden.

4. Verfahren nach einem der vorstehenden Ansprüche, **dadurch gekennzeichnet, dass** der Innenwiderstand R_{I} (3b) der Laserlichtquelle (3) von Referenzgas und Zielgas aus der jeweiligen zum aktuellen Grundstrom I_{DC_RG,act} bzw. I_{DC_ZG,act} gehörenden Steigung einer Spannung-Strom-Kennlinie der Laserlichtquelle (3) bestimmt wird.

5. Messsystem (1) ausgestaltet für die Durchführung des Verfahrens nach einem der Ansprüche 1 bis 4, mit einer Wellenlängen abstimmbaren temperaturstabilisierten Laserlichtquelle (3), einer Modulationseinrichtung (4) zur Bereitstellung des Grundstromes I_{DC} und eines Modulationsstromes I_{AC} für die Laserlichtquelle (3), einer Messkammer (11) für das Messgas (2), einem Lichtdetektor (5), einer mit dem Lichtdetektor (5) und der Modulationseinrichtung (4) verbundenen Auswerteeinheit (6), Mitteln (9; 6) zur Erfassung der an der Laserlichtquelle anliegenden Spannung U_{L}, Mitteln (12, 6) zur Erfassung der Lasergrundtemperatur T_{L}, Mitteln (6) zur Ermittlung des Innenwiderstandes Ri der Laserlichtquelle (3) sowie Mitteln (10, 6) zur Steuerung der Grundströme I_{DC} für das Referenzgas RG und das Zielgas ZG, wobei die Laserlichtquelle (3) dafür ausgelegt ist, einen Laserstrahl (7) mit einer Wellenlänge λ_{DC} mit einer Wellenlängen-Modulationsamplitude Δλ_{AC} zu emittieren, die Modulationseinrichtung (4) dafür ausgelegt ist, die Wellenlänge des Laserlichts der Laserlichtquelle (3) periodisch über die Absorptionslinie des Referenzgases RG und die Absorptionslinie des Zielgases ZG an einem Arbeitspunkt zu variieren und diese gleichzeitig mit einer Frequenz f und einer einstellbaren Amplitude zu modulieren, die Modulationseinrichtung (4) direkt mit der Laserlichtquelle (3) verbunden ist, der Lichtdetektor (5) dafür ausgelegt ist, den von der Laserlichtquelle (3) ausgehenden Laserstrahl (7) zu erfassen, nachdem dieser das Messgas (2) passiert hat, und ein Empfangssignal zu erzeugen, das von der Intensität des Laserlichtes nach dem Durchtritt durch das Messgas (2) abhängig ist und der Auswerteinheit (6) zugeführt wird, und die Mittel (9, 6) zur Erfassung der an der Laserlichtquelle anliegenden Spannung, die Mittel (12, 6) zur Erfassung der Lasergrundtemperatur, die Mittel (6) zur Ermittlung des Innenwiderstandes der Laserlichtquelle (3) sowie die Mittel (10, 6) zur Steuerung der Grundströme I_{DC} für das Referenzgas RG und das Zielgas ZG zusammenwirken, um die an der Laserlichtquelle (3) anliegende Spannung U_{L} zu erfassen und den Innenwiderstand R_{I} zu bestimmen, und davon abhängig die Grundströme I_{DC} für das Referenzgas RG und das Zielgas ZG mittels der Modulationseinrichtung (4) zu steuern, um den Wellenlängenabstand Δλ_{DC} zwischen dem Referenzgas RG und dem Zielgas ZG konstant zu halten.

## Claims

1. A method for operating an optical measuring system (1) with a wavelength-tunable temperature-stabilized laser light source (3) for measuring the concentration of a target gas ZG in a measured gas (2), provided that an instantaneous base current I_{DC_ZG,act} corresponding to a wavelength λ_{ZG} of a target gas absorption line is set so that, after a calibration, the wavelength distance Δλ_{DC} between the wavelength λ_{ZG} of the target gas absorption line for the target gas ZG and a wavelength λ_{RG} of a reference gas absorption line for a reference gas RG is maintained for the instantaneous base current I_{DC_ZG,act} of the target gas ZG and for the instantaneous base current I_{DC_RG,act} of the reference gas RG, **characterized in that** the calibration of the measuring system (1) is performed with the reference gas RG and the target gas ZG, whereby during calibration
- the base currents I_{DC_RG,cal} and I_{DC_ZG,cal} assigned to the gas absorption lines for the reference gas RG and for the target gas ZG are established,
- the associated electrical powers P_{DC_RG,cal} and P_{DC_ZG,cal} of the laser light source (3) are determined from the base currents I_{DC_RG,cal} and I_{DC_ZG,cal} as well as from the associated internal resistances R_{I_RG,cal} and R_{I_ZG,cal},
- a power difference ΔP_{DC,cal} is found by means of the electrical powers P_{DC-RG,cal} and P_{DC_ZG,cal} and this or one or more equivalent variables are stored in the measuring system (1),
and that during operation of the measuring system (1) a temperature difference in the laser light source (3), defined in advance during the calibration, between the operating points selected at the time of calibration of the reference gas RG, with a base current I_{DC_RG,cal} ascertained during the calibration and the target gas ZG, with a base current I_{DC_ZG,cal} ascertained during the calibration, is maintained by way of determining an necessary instantaneous base current I_{DC_ZG,act} for the target gas ZG as a function of an instantaneous base current I_{DC_RG,act} for the reference gas RG, whereby
- an instantaneous electrical power P_{DC_RG,act} of the laser source (3) assigned to the gas absorption line for the reference gas RG is ascertained from the instantaneous base current I_{DC_RG,act} and the instantaneous internal resistance R_{I_RG,act},
- an instantaneous electrical power P_{DC_ZG,act} of the laser source (3) assigned to the gas absorption line for the target gas ZG as the sum from the instantaneous electrical power P_{DC_RG,act} and the power difference ΔP_{DC,cal} is determined,
- the assigned instantaneous base current I_{DC_ZG,act} is calculated from the instantaneous electrical power P_{DC_ZG,act} of the laser source (3), taking the instantaneous internal resistance R_{I_RG,act} into consideration.

2. The method according to claim 1, **characterized in that** during operation the measurement of the concentration of the target gas ZG is performed with the base current I_{DC_ZG,cal} previously calculated from the power P_{DC_RG,act}, the power difference ΔP_{DC, cal} and the internal resistance R_{I_ZG,act}, and therefrom the gas concentration of the target gas ZG in the measured gas (2) is ascertained.

3. The method according to claim 1 or 2, **characterized in that** during operation of the measuring system (1) changes in a base laser temperature T_{L} of the laser light source (3) are taken into consideration by adapting the power difference ΔP_{DC,cal}.

4. A method according to any of the preceding claims, **characterized in that** the internal resistance R_{I} (3b) of the laser light source (3) of reference gas RG and target gas ZG is determined from a respective slope of a voltage/current characteristic of the laser light source (3) associated with the instantaneous base current I_{DC_RG,act} or I_{DC_ZG,act}.

5. Optical measuring system (1) designed to perform the method according to any of the claims 1 to 4, with a wavelength-tunable temperature-stabilized laser light source (3), a modulation device (4) for providing the base current I_{DC} and a modulation current I_{AC} for the laser light source (3), a measuring chamber (11) for the measured gas (2), a light detector (5), an evaluation unit (6) connected to the light detector (5) and the modulation device (4), means (9, 6) for detecting the voltage U_{L} present at the laser light source (3), means (12, 6) for detecting the laser base temperature T_{L}, means (6) for ascertaining the internal resistance R_{I} of the laser light source and means (10, 6) for controlling the base currents I_{DC} for the reference gas RG and the target gas ZG, wherein the laser light source (3) is configured to emit a laser beam (7) of a wavelength λ_{DC} having a wavelength modulation amplitude Δλ_{AC}, the modulation device (4) is configured to periodically vary the wavelength of the laser light of the laser light source (3) by way of the absorption line for the reference gas RG and the absorption line for the target gas ZG at an operating point and, at the same time, to modulate the same with a frequency f and a settable amplitude, the modulation device (4) being directly connected to the laser light source (3), the light detector (5) is configured to detect the laser beam (7) originating from the laser light source (3) after it has passed through the measured gas (2), and to generate a reception signal, which is dependent on the intensity of the laser light after it has passed through the measured gas (2) and is supplied to the evaluation unit (6), and the means (9, 6) for detecting the voltage U_{L} present at the laser light source (3), the means (12, 6) for detecting the laser base temperature, the means (6) for ascertaining the internal resistance R_{I} of the laser light source (3) and the means (10, 6) for controlling the base currents I_{DC} for the reference gas RG and the target gas ZG are configured to cooperate so as to detect the voltage U_{L} present at the laser light source (3) and to determine the internal resistance R_{I} and, as a function thereof, control the base currents I_{DC} for the reference gas RG and the target gas ZG using the modulation device (4) so as to keep the wavelength distance Δλ_{DC} between the reference gas RG and the target gas ZG constant.

## Revendications

1. Procédé pour le fonctionnement d'un système de mesure optique (1) comprenant une source de lumière laser (3) accordable en longueur d'onde et stabilisée en température servant à mesurer la concentration d'un gaz cible ZG dans un gaz de mesure (2), dans lequel un courant de base actuel I_{DC_ZG,act} correspondant à une longueur d'onde λ_{ZG} d'une raie d'absorption de gaz cible est réglé de telle sorte que, après étalonnage, l'espacement de longueur d'onde Δλ_{DC} entre la longueur d'onde λ_{ZG} de la raie d'absorption de gaz cible du gaz cible ZG et une longueur d'onde λ_{RG} d'une raie d'absorption de gaz de référence d'un gaz de référence RG soit maintenu pour le courant de base actuel I_{DC_ZG,act} du gaz cible ZG et le courant de base actuel I_{DC_RG,act} du gaz de référence RG, **caractérisé en ce que**
l'étalonnage du système de mesure (1) est effectué avec le gaz de référence RG et le gaz cible ZG, dans lequel, lors de l'étalonnage
- les courants de base I_{DC_RG,cal} et I_{DC_ZG,cal} associés aux raies d'absorption de gaz du gaz de référence RG et du gaz cible ZG sont déterminés,
- les puissances électriques correspondantes P_{DC_RG,cal} et P_{DC_ZG,cal} de la source de lumière laser (3) sont déterminées à partir des courants de base I_{DC_RG,cal} et I_{DC_ZG,cal} ainsi que des résistances internes associées R_{I_RG,cal} et R_{I_ZG,cal},
- une différence de puissance ΔP_{DC,cal} est déterminée au moyen des puissances électriques P_{DC_RG,cal} et P_{DC_ZG,cal} et cette grandeur ou une ou plusieurs grandeurs équivalentes est/sont stockée(s) dans le système de mesure (1),
et **en ce que**, pendant le fonctionnement du système de mesure (1), une différence de température, définie au préalable lors de l'étalonnage, est maintenue dans la source de lumière laser (3) entre les points de fonctionnement, sélectionnés à l'instant de l'étalonnage, du gaz de référence RG, avec un courant de base I_{DC_RG,cal}, déterminé lors de l'étalonnage, et du gaz cible ZG, avec un courant de base I_{DC_ZG,cal}, déterminé lors de l'étalonnage, en déterminant le courant de base actuel I_{DC_ZG,act} requis à cet effet pour le gaz cible ZG en fonction du courant de base actuel I_{DC_RG,act} du gaz de référence RG, dans lequel
- la puissance électrique actuelle P_{DC_RG,act}, associée à la raie d'absorption de gaz du gaz de référence, de la source laser (3) est déterminée à partir du courant de base actuel I_{DC_RG,act} et de la résistance interne actuelle R_{I_RG}, act,
- la puissance électrique actuelle P_{DC_ZG,act} de la source laser (3), associée à la raie d'absorption de gaz du gaz cible, est déterminée comme étant la somme de la puissance électrique actuelle P_{DC_RG,act} et de la différence de puissance ΔP_{DC,cal},
- le courant de base actuel associé I_{DC_ZG,act} est calculé à partir de la puissance électrique actuelle P_{DC_ZG,act} de la source laser (3) en tenant compte de la résistance interne actuelle R_{I_ZG,act}.

2. Procédé selon la revendication 1, **caractérisé en ce que**, pendant le fonctionnement, la mesure de la concentration du gaz cible ZG est effectuée avec le courant de base I_{DC_ZG,cal} préalablement calculé à partir de la puissance P_{DC_RG,act}, de la différence de puissance ΔP_{DC,cal} et de la résistance interne R_{I_ZG,act} et à partir de celle-ci, la concentration du gaz cible ZG dans le gaz de mesure (2) est déterminée.

3. Procédé selon la revendication 1 ou 2, **caractérisé en ce que**, lors du fonctionnement du système de mesure (1), des variations d'une température de base T_{L} du laser de la source de lumière laser (3) sont prises en compte par ajustement de la différence de puissance ΔP_{DC,cal}.

4. Procédé selon l'une des revendications précédentes, **caractérisé en ce que** la résistance interne R_{I} (3b) de la source de lumière laser (3) du gaz de référence et du gaz cible est déterminée à partir de la pente respective, correspondant au courant de base actuel I_{DC_RG,act} ou I_{DC_ZG,act}, d'une caractéristique tension-courant de la source de lumière laser (3).

5. Système de mesure (1) conçu pour mettre en œuvre le procédé selon l'une des revendications 1 à 4, comprenant une source de lumière laser (3) accordable en longueur d'onde et stabilisée en température, un dispositif de modulation (4) servant à fournir le courant de base I_{DC} et un courant de modulation I_{AC} destinés à la source de lumière laser (3), une chambre de mesure (11) destinée au gaz de mesure (2), un détecteur de lumière (5), une unité d'évaluation (6) reliée au détecteur de lumière (5) et au dispositif de modulation (4), des moyens (9; 6) servant à détecter la tension U_{L} appliquée à la source de lumière laser, des moyens (12, 6) servant à détecter la température de base T_{L} du laser, des moyens (6) servant à déterminer la résistance interne R_{I} de la source de lumière laser (3) ainsi que des moyens (10, 6) servant à commander les courants de base I_{DC} destinés au gaz de référence RG et au gaz cible ZG, dans lequel la source de lumière laser (3) est conçue pour émettre un faisceau laser (7) ayant une longueur d'onde λ_{DC} avec une amplitude de modulation de longueur d'onde Δλ_{AC}, le dispositif de modulation (4) est conçu pour faire varier périodiquement la longueur d'onde de la lumière laser de la source de lumière laser (3) sur la raie d'absorption du gaz de référence RG et la raie d'absorption du gaz cible ZG en un point de fonctionnement et pour les moduler simultanément avec une fréquence f et une amplitude réglable, le dispositif de modulation (4) est directement relié à la source de lumière laser (3), le détecteur de lumière (5) est conçu pour détecter le faisceau laser (7) émanant de la source de lumière laser (3) après son passage à travers le gaz de mesure (2) et pour générer un signal de réception qui dépend de l'intensité de la lumière laser après passage à travers le gaz de mesure (2) et qui est envoyé à l'unité d'évaluation (6), et les moyens (9, 6) servant à détecter la tension appliquée à la source de lumière laser, les moyens (12, 6) servant à détecter la température de base du laser, les moyens (6) servant à déterminer la résistance interne de la source de lumière laser (3) ainsi que les moyens (10, 6) servant à commander les courants de base I_{DC} destinés au gaz de référence RG et au gaz cible ZG interagissent afin de détecter la tension U_{L} appliquée à la source de lumière laser (3) et de déterminer la résistance interne R_{I}, et, en fonction de celles-ci, de commander les courants de base I_{DC} destinés au gaz de référence RG et au gaz cible ZG au moyen du dispositif de modulation (4) afin de maintenir constant l'espacement de longueur d'onde Δλ_{DC} entre le gaz de référence RG et le gaz cible ZG.
